# EUROPÄISCHE PATENTSCHRIFT

(11) **EP 1 110 297 B1**
(45) Veröffentlichungstag und Bekanntmachung des Hinweises auf die Patenterteilung: **29.05.2002**
(21) Anmeldenummer: 99946015.7
(22) Anmeldetag: 23.08.1999
(51) Int. Cl.: H02K 5/128, F04D 13/06

(54) **FLÜSSIGKEITSPUMPE, INSBESONDERE LAUGENPUMPE FÜR HAUSHALTSGERÄTE, UND VERFAHREN ZU DEREN ZUSAMMENBAU**
LIQUID PUMP, ESPECIALLY A LYE PUMP FOR DOMESTIC APPLIANCES AND METHOD FOR THE ASSEMBLY THEREOF
POMPE A LIQUIDE, EN PARTICULIER POMPE A LESSIVE POUR APPAREILS MENAGERS, ET SON PROCEDE D'ASSEMBLAGE

(30) Priorität: 02.09.1998 DE 19839990
(43) Veröffentlichungstag der Anmeldung: 27.06.2001
(73) Patentinhaber: BSH Bosch und Siemens Hausgeräte GmbH, 81669 München (DE)
(72) Erfinder: EISERT, Horst, D-97297 Waldbuettelbrunn (DE)
(74) Vertreter: Prünte, Peter
(86) Internationale Anmeldenummer: EP9906186
(87) Internationale Veröffentlichungsnummer: WO0014854

(56) Entgegenhaltungen:
- EP-A- 0 416 237
- DE-A- 3 918 333
- DE-A- 19 509 454
- DE-U- 9 016 330

## Beschreibung

Die Erfindung bezieht sich auf eine Flüssigkeitspumpe, insbesondere Laugenpumpe für Haushaltsgeräte, gemäß Anspruch 1 und ein Verfahren zu deren Zusammenbau gemäß Anspruch 15.

Beim Gegenstand vorliegender Erfindung wird von Laugenpumpen ausgegangen, wie sie z.B. durch die DE 90 16 330 U bzw.
DE 38 18 532 A1 bekannt sind. Laugenpumpen dieser Bauart weisen als sogenannte Naßläuferpumpen ein Spaltrohr auf, innerhalb dessen ein, vorzugsweise permanenterregter, Rotor drehbar gelagert ist und das radial außen ein bewickeltes Statorpaket aufweist. Das vorzugsweise als topfförmiges Gehäuse ausgebildete Spaltrohr geht bei der bekannten Bauart an seiner Topfrandseite in einen Flansch über, der den Boden einer Pumpenkammer bildet und an den ein Pumpengehäuse mit Dichtungszwischenlage anschließbar ist. Die Rotorwelle ist in einer an diesem Ende im Spaltrohr fixierbaren Lageraufnahme drehbar gelagert und ragt mit einem, ein Pumpenrad aufnehmenden, Wellenende in das Pumpengehäuse.

Gemäß Aufgabe vorliegender Erfindung soll der Fertigungsbzw. Montageaufwand für eine derartige Flüssigkeitspumpe bei hoher kundenspezifischer Anpassungsflexibilität gemindert werden. Die Lösung dieser Aufgabe gelingt erfindungsgemäß durch eine Flüssigkeitspumpe gemäß Patentanspruch 1 sowie ein Verfahren zum Zusammenbau einer solchen Flüssigkeitspumpe gemäß Anspruch 15; vorteilhafte Ausgestaltungen der Flüssigkeitspumpe sind jeweils Gegenstand der Ansprüche 2-14.

Bei dem erfindungsgemäßen Aufbau der Flüssigkeitspumpe können in besonders einfacher Weise von der spaltrohroffenen gut zugänglichen B-Seite her in Richtung zur A-Seite die wesentlichen Baukastenbauteile des Spaltrohrs mit seinen Lageraufnahmen, des Pumpengehäuses sowie des Statorpaketes bzw. der das Statorpaket aufnehmenden Abdeckkappe lediglich durch Steck- bzw. Schnappverbindungen unter Verzicht auf Schraubbzw. Schweißfixierungen montiert und gegebenenfalls beim Prüflauf oder in einem Schadensfall demontiert und ausgetauscht werden. Dabei ist in vorteilhafter Weise das Statorpaket durch seine Steckaufnahme am Pumpengehäuse ohne Abstützbelastung gegenüber dem Spaltrohr fixierbar; nach einer Ausgestaltung der Erfindung ist lediglich ein gegenseitig ausrichtender leichter Schiebesitz vorgesehen.

Durch die nach einer Ausgestaltung der Erfindung vorgesehenen elastischen, insbesondere elastomeren, Zwischenlagerteile zwischen den einzelnen in Steckmontage-Halterung zu verbindenden Bauteilen, insbesondere des Spaltrohres mit dem Pumpengehäuse sowie der B-seitigen Lageraufnahme mit dem Spaltrohr, können einerseits Toleranzen ausgeglichen und gegenseitige Schiefstellungen vermieden bzw. ausgeglichen, eine hohe Dichtigkeit gegenüber einem Ausdringen von Flüssigkeit aus dem Pumpengehäuse bzw. gegebenenfalls aus der Rotorkammer des Spaltrohres gewährleistet sowie gleichzeitig eine besonders hohe Geräuscharmut durch die Abdämpfung von rotorseitigen bzw. wicklungsseitigen Schwingungen erreicht werden.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:
- FIG 1: in axialem Aufbaumontage-Schnitt eine Flüssigkeitspumpe mit permanenterregtem Einphasen-Synchronmotor mit Spaltrohrläufer;
- FIG 2: einen vergrößerten Detailausschnitt aus FIG 1 im Bereich des B-seitigen, topfrandseitigen Endes des Spaltrohres;
- FIG 3: einen vergrößerten Detailausschnitt aus FIG 1 im Bereich des A-seitigen, topfbodenseitigen Endes des Spaltrohres.

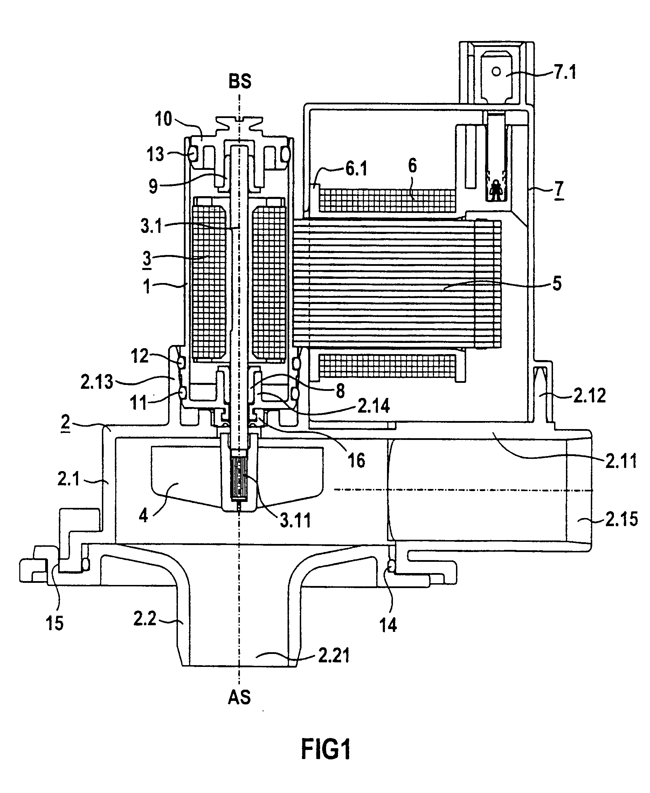

FIG 1 zeigt - unter Weglassung der jeweiligen Schnitt-Schraffuren - eine Flüssigkeitspumpe mit in einem Pumpengehäuse 2 angeordnetem Pumpenrad 4 auf einem A-seitigen Wellenende 3.11 der Rotorwelle 3.1 eines dem Pumpengehäuse 2 axial vorgelagerten dauermagneterregten Einphasen-Synchronmotors. Der dauermagneterregte Rotor 3 des Einphasen-Synchronmotors ist in einem topfförmigen Spaltrohr 1 über ein Zylinderlager 8 am topfbodenseitigen AS-Ende des Spaltrohrs 1 und ein Zylinderlager 9 am topfrandseitigen BS-Ende des Spaltrohres 1 drehbar gelagert. Das A-seitige Zylinderlager 8 wird im Topfboden des Spaltrohres 1 aufgenommen; zum Schutz gegen ein Eindringen von Pumpen-Flüssigkeit in die Rotorkammer des Spaltrohres 1 ist dem A-seitigen Zylinderlager 8 eine auf eine Spaltrohr-Aufnahme aufrastbare Dichtlippen-Dichtung 16 vorgelagert, die mit zumindest einer Dichtlippe auf dem Außenumfang der Rotorwelle 3.11 aufliegt. Das B-seitige Zylinderlager 9 ist axial in eine Lageraufnahme 10 eingedrückt, die ihrerseits axial in Steckmontage-Halterung in das B-seitige offene Ende des Spaltrohres 1 eindrückbar ist.

Die Statorwicklung 6 des Einphasen-Synchronmotors ist auf einen Spulenkörper 6.1 gewickelt, der seinerseits von einem Statorpaket 5 aufgenommen ist. Der Spulenkörper 6.1 und damit das bewickelte Statorpaket 5 sind über einen Schiebesitz in einer Abdeckkappe 7 aufgenommen. Die Abdeckkappe 7 ist mit Kontakten 7.1 zum Anschluß eines kundenspezifischen Steckers versehen; bei Änderung der Kundenspezifikation ist lediglich eine diesbezügliche Änderung der Abdeckhaube 7 im Bereich ihrer Kontakthalterung notwendig.

Die Flüssigkeitspumpe ist erfindungsgemäß derart aufgebaut, daß durch axiales Zuführen von der B-Seite einerseits das zuvor mit dem Rotor 3 bestückte Spaltrohr 1 als auch die zuvor mit dem bewickelten Statorpaket 5 bestückte Abdeckkappe 7 axial von der B-Seite an das Pumpengehäuse 2 ansteckbar und mit diesem in Steckmontagehalterung derart verbindbar sind, daß zwischen dem bewickelten Statorpaket 5 bzw. der dieses aufnehmenden Abdeckkappe 7 einerseits und dem Spaltrohr 1 andererseits eine radiale Abstützbelastung ferngehalten ist; in vorteilhafter Weise ist lediglich ein leichter, gegenseitig ausrichtender Schiebesitz zwischen diesen Bauteilen vorgesehen.

Zur jeweiligen Steckmontage-Halterung zwischen dem Spaltrohr 1 bzw. dem bewickelten Statorpaket 5 oder der Abdeckkappe 7 einerseits und dem Pumpengehäuse 2 andererseits ist dieses mit einem motorseitigen Flanschteil 2.11 versehen, an dem eine axial vorstehende Steckaufnahme 2.12 zum Aufstecken der im übrigen sich an der Flanschaußenfläche abstützenden Abdeckkappe 7 sowie eine axial vorstehende Steckhülse 2.13, vorzugsweise einstückig, angeformt, in die das Spaltrohr 1 mit seinem A-seitigen Ende ebenfalls im Sinne einer Steckmontage-Halterung axial einsteckbar ist.

In vorteilhafter Weise ist das Pumpengehäuse 2 axial zweigeteilt in ein Pumpengehäuse-Oberteil 2.1, vorzugsweise mit integriertem Druckstutzen 2.15, und ein Pumpengehäuse-Unterteil 2.2, vorzugsweise mit integriertem Saugstutzen 2.21; dadurch ist einerseits eine gute Zugänglichkeit für eine vorteilhafte Gegenabstützung des Pumpenrades 4 bei dem Eindrücken des Wellenendes 3.11 der Rotorwelle 3.1 in das Pumpenrad 4 während der Steckmontage-Halterung des Spaltrohres 1 am Pumpengehäuse 2 ohne axiale Belastung irgendeiner Lageraufnahme gewährleistet und andererseits durch kundenspezifische Anpassung lediglich des Pumpengehäuse-Unterteils 2.2 ein einheitliches Design für das Pumpengehäuse-Oberteil 2.1 verwendbar. Zur einfachen dichten Verbindung zwischen dem Pumpengehäuse-Oberteil 2.1 und dem Pumpengehäuse-Unterteil 2.2 ist ein gegenseitiger Bajonettverschluß 15 mit einer zwischenliegenden Pumpengehäuse-Dichtung 14, zweckmäßigerweise in Form eines zuvor auf das Pumpengehäuse-Unterteil 2.2 aufspannbaren O-Ringes, vorgesehen.

Nach einer besonderen Ausgestaltung der Erfindung sind im Bereich der Steckmontage-Halterungen zwischen dem Spaltrohr 1 und dem Pumpengehäuse 2, insbesondere dem Flanschteil 2.11 des Pumpengehäuse-Oberteils 2.1, bzw. zwischen der B-seitigen Lageraufnahme 10 und dem offenen Ende des Spaltrohres 1 elastische, insbesondere elastomere, Zwischenlagerteile 11;12 bzw.13 vorgesehen; diese elastischen Zwischenlagerteile dienen einerseits dem Toleranzausgleich und erleichtern die Steckmontage bei gesichertem Halterungssitz und gewährleisten andererseits auch eine hohe vorteilhafte Geräuschentkopplung als auch einen sicheren Abdichtungsschutz gegen das Ausdringen von Pumpenflüssigkeit.

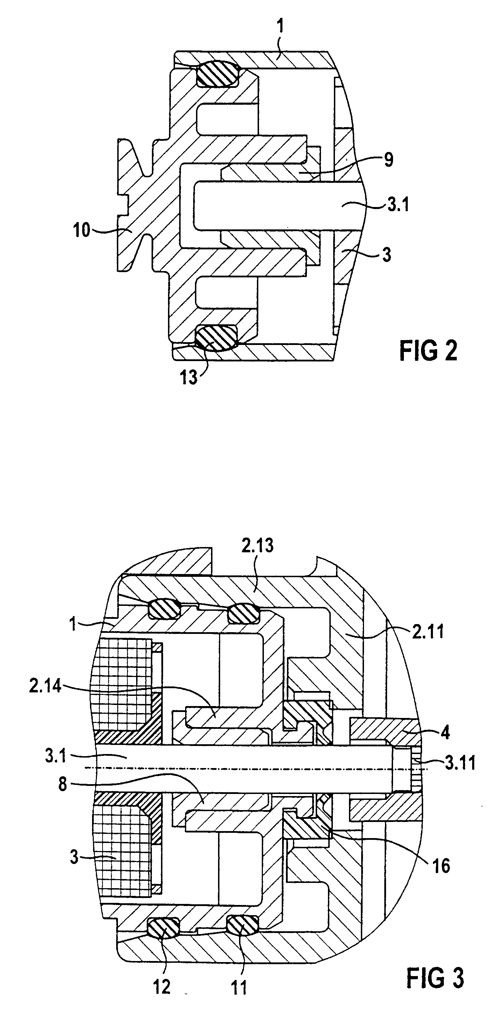

Nach einer Ausgestaltung der Erfindung sind die elastischen Zwischenlagerteile 11;12 bzw.13 zur Erhöhung der Sicherheit der Steckkontakt-Halterung jeweils formschlüssig an den zu verbindenden Bauteilen im Sinne derer Schnapp- bzw. Rastverbindung fixierbar; in den vergrößterten Detailausschnitten gemäß FIG 2;3 sind jeweils dementsprechende radiale Hinterschneidungen am topfrandseitigen Ende im Spaltrohr 1 bzw. in der Lageraufnahme 10 bzw. am topfbodenseitigen Ende des Spaltrohres in der Steckhülse 2.13 des Flanschteils 2.1 und am Außenumfang des Spaltrohres 1 ersichtlich; in diese Hinterschneidungen sind die elastischen Zwischenlagerteile entweder vormontiert eingerastet oder schnappen beim Zusammenstecken der Bauteile ein.

Die elastischen Zwischenlagerteile 11;12 bzw.13 können als getrennte Bauteile, insbesondere O-Ringe, aufgespannt bzw. eingelegt sein oder nach einer montagetechnisch besonders vorteilhaften Ausgestaltung als 2-Komponententeil bereits im Sinne einer Vormontage z.B. an das Spaltrohr, insbesondere Kunststoff-Spaltrohr, oder an die Aufnahme des Pumpengehäuses, insbesondere Kunststoff-Pumpengehäuse, angespritzt sein.

Selbstverständlich werden vom Schutzumfang vorliegender Erfindung auch Lösungen umfaßt, bei denen der Flanschteil 2.11 nicht unmittelbarer Bestandteil eines Pumpengehäuses 2 ist, sondern z.B. mittelbar zur Verbindung mit einem ähnlichen Bauteil dient.

Ein vorteilhafter Zusammenbau der Flüssigkeitspumpe weist folgende Verfahrensschritte auf:
Von B-Seite axiales Eindrücken eines A-seitigen Lagers, insbesondere Zylinderlagers 8, in eine topfbodenseitige Lageraufnahme 2.14 des Spaltrohres 1;
aufbringen der elastischen Zwischenlagerteile 11;12 insbesondere O-Ringe, auf das A-seitige Ende des Spaltrohres 1;
von B-Seite axiales Einstecken des Rotors 3 in das Spaltrohr 1 mit axialem Eindrücken des A-seitigen Endes des Spaltrohres 1 in die Steckaufnahme 2.13 des Pumpengehäuses 2 und gleichzeitigem Eindrücken des A-seitigen Wellenendes 3.11 der Rotorwelle 3.1 in das von der A-Seite her in dem noch nicht mit seinem Pumpengehäuse-Unterteil 2.2 verschlossenen Pumpengehäuse-Oberteil 2.1 abstützbare Pumpenrad 4;
Aufbringen des elastischen Zwischenlagerteils 13 auf die B-seitige Lageraufnahme 10;
von B-Seite axiales Eindrücken der zuvor mit einem Lager, insbesondere einem Zylinderlager 9 bestückten B-seitigen Lageraufnahme 10 in das Spaltrohr 1;
von B-Seite axiales Aufstecken der Abdeckkappe 7 mit bewickeltem Statorpaket 5 auf die Steckaufnahme 2.12 des Pumpengehäuse-Oberteils 2.1 mit Anlage an dem Flanschteil 2.11. Verbindung des Pumengehäuse-Unterteils 2.2 mit dem Pumpengehäuse-Oberteil 2.1, vorzugsweise unter Zwischenlage einer Pumpengehäuse-Dichtung 14.

## Patentansprüche

1. Flüssigkeitspumpe, insbesondere von einem Einphasen-Synchronmotor mit permanentmagnetischem Rotor angetriebene Laugenpumpe für Haushaltsgeräte,
- mit einem radial innenseitig einen permanenterregten Rotor (3) aufnehmenden Spaltrohr (1) und einem dazu radial außenseitigen Stator, insbesondere mit einem bewickelten Statorpaket (5);
- mit einem ein Pumpenrad (4) auf einem Wellenende (3.11) der Rotorwelle (3.1) aufnehmenden und mit dem einen axialen Ende des Spaltrohres (1) verbundenen Pumpengehäuse (2);
- mit einer axialen Steckmontage-Halterung zwischen dem Pumpengehäuse (2) einerseits und dem Spaltrohr (1) andererseits;
- mit einer axialen Steckmontage-Halterung zwischen dem Pumpengehäuse (2) einerseits und dem Stator, insbesondere dem bewickelten Statorpaket (5), andererseits.

2. Flüssigkeitspumpe nach Anspruch 1
- mit einer mittelbaren Steckmontage-Halterung zwischen dem Pumpengehäuse (2) einerseits und dem Stator, insbesondere dem bewickelten Statorpaket (5), andererseits, unter Vermittlung einer das bewickelte Statorpaket (5) aufnehmenden Abdeckkappe (7).

3. Flüssigkeitspumpe nach Anspruch 1 und/oder 2
- mit einer von wesentlicher radialer Abstützbelastung freien, insbesondere geführten, Schiebesitzaufnahme zwischen dem Spaltrohr (1) einerseits und dem Stator, insbesondere dem bewickelten Statorpaket (5), oder der diesen aufnehmenden Abdeckkappe (7) andererseits.

4. Flüssigkeitspumpe nach zumindest einem der Ansprüche 1-3
- mit einem topfförmigen Spaltrohr (1);
- mit einem durch den Topfboden des Spaltrohres (1) hindurch in das Pumpengehäuse (2) ragenden, A-seitigen Wellenende (3.11) der Rotorwelle (3) für eine Aufnahme des Pumpenrades (4).

5. Flüssigkeitspumpe nach zumindest einem der Ansprüche 1-4
- mit axial in eine Aufnahme des Pumpenrades (4) einsteckbarer Rotorwelle (3.1).

6. Flüssigkeitspumpe nach zumindest einem der Ansprüche 1-5, insbesondere nach Anspruch 4 bzw. 5
- mit einer in axialer Steckmontage-Halterung am B-seitigen Ende des Spaltrohres (1) fixierbaren Lageraufnahme (10) für das B-seitige Wellenende der Rotorwelle (3.1).

7. Flüssigkeitspumpe nach zumindest einem der Ansprüche 1-6
- mit einer derartigen Ausbildung, daß jeweils von der B-Seite her das Spaltrohr (1) mit dem Pumpengehäuse (2) und/oder der Stator, insbesondere das bewicklelte Statorpaket (5), bzw. die diese aufnehmende Abdeckkappe (7) mit dem Pumpengehäuse (2) und/oder die Rotorwelle (3.1) mit dem, von der A-Seite her dabei abstützbaren, Pumpenrad (4) und/oder die B-seitige Lageraufnahme (10) mit dem Spaltrohr (1) axial zusammensteckbar sind.

8. Flüssigkeitspumpe nach zumindest einem der Ansprüche 2-7
- mit einer kundenspezifisch, insbesondere hinsichtlich Anschluß- und Einbauspezifikationen, ausgebildeten Abdeckkappe (7) bei ansonsten weitgehend universell ausgebildeten Einheits-Motorbauteilen.

9. Flüssigkeitspumpe nach zumindest einem der Ansprüche 1-8
- mit einem Pumpengehäuse (2) mit einem motorseitigen radialen Flanschteil (2.11) mit vorzugsweise angeformten, axial vorstehender Steckhülse (2.13) bzw. Steckaufnahmen (2.12) für korrespondierende Gegensteckaufnahmen des Spaltrohres (1) bzw. des Stators, insbesondere des bewickelten Statorpakets (5), bzw. der aufnehmenden Abdeckkappe (7).

10. Flüssigkeitspumpe nach zumindest einem der Ansprüche 1-9
- mit zumindest einem elastischen, insbesondere elastomeren, Zwischenlagerteil (11;12 bzw.13), insbesondere in Form zumindest eines 0-Ringes, im Bereich der gegenseitigen Steckmontage-Halterung zwischen dem Spaltrohr (1) und dem Pumpengehäuse (2) bzw. zwischen der Lageraufnahme (10) und dem Spaltrohr (1).

11. Flüssigkeitspumpe nach Anspruch 10
- mit einer formschlüssigen Fixierung der elastischen Zwischenlagerteile (11;12 bzw.13) relativ zu ihren Steckmontage-Bauteilen im Sinne einer gegenseitigen Schnapp- bzw. Rastverbindung.

12. Flüssigkeitspumpe nach Anspruch 10 und/oder 11
- mit nach Art eines Mehrkomponenten-Bauteils jeweils mit einem der in gegenseitiger Steckmontage-Halterung zu verbindenden Bauteile integrierten elastischen Zwischenlagerteil (11;12 bzw.13).

13. Flüssigkeitspumpe nach zumindest einem der Ansprüche 1-12
- mit einem axial zweigeteilten Pumpengehäuse (2);
- mit einem motorseitigen Pumpengehäuse-Oberteil (2.1), insbesondere mit integriertem Druckstutzen (2.15);
- mit einem motorabgewandten, mit dem Pumpengehäuse-Oberteil (2.1) verbindbaren, Pumpengehäuse-Unterteil (2.2), insbesondere mit integriertem Saugstutzen (2.21).

14. Flüssigkeitspumpe nach Anspruch 13
- mit einem kundenspezifisch variablen Pumpengehäuse-Unterteil (2.2);
- mit einem universal verwendbaren, einheitlichen Pumpengehäuse-Oberteil (2.1).

15. Verfahren zum Zusammenbau der Flüssigkeitspumpe nach zumindest einem der Ansprüche 1-14 mit u.a. folgenden Verfahrensschritten:
- von B-Seite axiales Eindrücken eines A-seitigen Lagers, insbesondere Zylinderlagers (8), in eine topfbodenseitige Lageraufnahme (2.14) des Spaltrohres (1);
- Aufbringen der elastischen Zwischenlagerteile (11;12) insbesondere 0-Ringe, auf das A-seitige Ende des Spaltrohres (1);
- von B-Seite axiales Einstecken des Rotors (3) in das Spaltrohr (1) mit axialem Eindrücken des A-seitigen Endes des Spaltrohres (1) in die Steckaufnahme (2.13) des Pumpengehäuses (2) und gleichzeitigem Eindrücken des A-seitigen Wellenendes (3.11) der Rotorwelle (3.1) in das von der A-Seite her in dem noch nicht mit seinem Pumpengehäuse-Unterteil (2.2) verschlossenen Pumpengehäuse-Oberteil (2.1) abstützbare Pumpenrad (4);
- Aufbringen des elastischen Zwischenlagerteils (13) auf die B-seitige Lageraufnahme (10);
- von B-Seite axiales Eindrücken der zuvor mit einem Lager, insbesondere einem Zylinderlager (9) bestückten B-seitigen Lageraufnahme (10) in das Spaltrohr (1);
- von B-Seite axiales Aufstecken der Abdeckkappe (7) mit bewickeltem Statorpaket (5) auf die Steckaufnahme (2.12) des Pumpengehäuse-Oberteils (2.1) mit Anlage an dem Flanschteil (2.11) ;
- Verbindung des Pumengehäuse-Unterteils (2.2) mit dem Pumpengehäuse-Oberteil (2.1), vorzugsweise unter Zwischenlage einer Pumpengehäuse-Dichtung (14).

## Claims

1. Liquid pump, particularly of a single phase, synchronous motor with a washing solution pump, which is driven by a permanently magnetic rotor, for domestic appliances,
- with a split tube (1), which receives a permanently excited rotor (3) radially at the inner side, and a stator, particularly with a wound stator lamination stack (5), radial thereto at the outer side;
- with a pump housing (2) receiving a pump impeller (4) on a shaft end (3.11) of the rotor shaft (3.1) and connected with one axial end of the split tube (1);
- with an axial plug-mounting mount between the pump housing (2) on the one hand and the split tube (1) on the other hand; and
- with an axial plug-mounting mount between the pump housing (2) on the one hand and the stator, particularly the wound stator lamination stack (5), on the other hand.

2. Liquid pump according to claim 1,
- with an indirect plug-mounting mount between the pump housing (2) on the one hand and the stator, particularly the wound stator lamination stack (5), on the other hand with interposition of a cover cap (7) receiving the wound stator lamination stack (5).

3. Liquid pump according to claim 1 and/or 2,
- with a push-seat receptacle, which is, in particular, guided and is substantially free of radial support loading, between the split tube (1) on the one hand and the stator, particularly the wound stator lamination stack (5) or the cover cap (7) receiving this on the other hand.

4. Liquid pump according to at least one of claims 1 to 3,
- with a pot-shaped split tube (1); and
- with an A-side shaft end (3.11), which projects through the pot base of the split tube (1) into the pump housing (2), of the rotor shaft (3) for reception of the pump impeller (4).

5. Liquid pump according to at least one of claims 1 to 4,
- with a rotor shaft (3.1) axially insertable into a receptacle of the pump impeller (4).

6. Liquid pump according to at least one of claims 1 to 5, particularly according to claim 4 or 5,
- with a bearing receptacle (10), which is fixable in an axial plug-mounting mount at the B-side end of the split tube (1), for the B-side shaft end of the rotor shaft (3.1).

7. Liquid pump according to at least of one claims 1 to 6,
- with a construction of such a kind that the split tube (1) can be plugged together with the pump housing (2) and/or the stator, particularly the wound stator lamination stack (5), or the cover cap (7), which receives this, can be plugged together with the pump housing (2) and/or the rotor shaft (3.1) can be plugged together with the pump impeller (4), which in that case can be supported from the A-side, and/or the B-side bearing receptacle (10) can be plugged together with the split tube (1) in each case axially from the B-side.

8. Liquid pump according to at least one of claims 2 to 7,
- with a cover cap (7), which is constructed to be customer-specific particularly with respect to connection and installation specifications, in otherwise largely universally constructed standard motor components.

9. Liquid pump according to at least one of claims 1 to 8,
- with a pump housing (2) with a radial flange part (2.11), which is at the motor side, with a preferably integrally formed, axially protruding plug sleeve (2.13) or plug receptacle (2.12) for a corresponding counter-plug reception of the split tube (1) or the stator, particularly the wound stator lamination stack (5), or the receiving cover cap (7).

10. Liquid pump according to at least one of claims 1 to 9,
- with at least one resilient, particularly elastomeric, intermediate bearing member (11; 12 or 13), particularly in the form of an O-ring, in the region of the mutual plug-mounting mount between the split tube (1) and the pump housing (2) or between the bearing receptacle (10) and split tube (1).

11. Liquid pump according to claim 10,
- with a mechanically positive fixing of the resilient intermediate bearing members (11; 12 or 13) relative to the plug-mounting components thereof in the sense of a mutual snap or detent connection.

12. Liquid pump according to claim 10 and/or 11,
- with a form of multi-component part each with a respective resilient intermediate bearing member (11; 12 or 13) integrated in one of the parts to be connected in the mutual plug-mounting mount.

13. Liquid pump according to at least one of claims 1 to 12,
- with a pump housing (2) axially divided into two;
- with a pump housing upper part (2.1) at the motor side, particularly with an integrated pressure stub pipe (2.15); and
- with a pump housing lower part (2.2), particularly with an integrated suction stub pipe (2.21), which is remote from the motor and connectible with the pump housing upper part (2.1).

14. Liquid pump according to claim 13,
- with a pump housing lower part (2.2) variable in a manner specific to customer; and
- with a universally usable, uniform pump housing upper part (2.1).

15. Method for assembly of the liquid pump according to at least one of claims 1 to 14 by inter alia the following method steps:
- axial pressing in of an A-side bearing, especially cylinder bearing (8), from the B-side into a bearing receptacle (2.14), which is at the pot base side, of the split tube (1);
- mounting of the resilient intermediate bearing member (11; 12), particularly O-rings, on the A-side end of the split tube (1);
- axial plugging of the rotor (3) from the B-side into the split tube (1) by axial pressing of the A-side end of the split tube (1) into the plug receptacle (2.13) of the pump housing (2) and simultaneous pressing of the A-side shaft end (3.11) of the rotor shaft (3.1) into the pump impeller (4) supportable from the A-side in the pump housing upper part (2.1) not yet closed by its pump housing lower part (2.2); mounting of the resilient intermediate bearing member (13) on the B-side bearing receptacle (10);
- axial pressing of the B-side bearing receptacle (10), which is previously equipped with a bearing, particularly a cylindrical bearing (9), from the B-side into the split tube (1);
- axial plugging of the cover cap (7) together with the wound stator lamination stack (5) from the B-side onto the plug receptacle (2.12) of the pump housing upper part (2.1) with contact with the flange part (2.11); and
- connection of the pump housing lower part (2.2) with the pump housing upper part (2.1), preferably with interposition of a pump housing seal (14).

## Revendications

1. Pompe à liquide, en particulier pompe à lessive commandée par un moteur synchrone monophasé à rotor à flux magnétique permanent, pour appareils ménagers,
- comprenant une gaine (1) recevant le réceptacle, sur son côté intérieur dans le sens radial, à un rotor (3) à excitation permanente, ainsi qu'un stator situé sur le côté extérieur de celui-ci dans le sens radial, en particulier un paquet de stator bobiné (5) ;
- comprenant un corps de pompe (2) qui sert de réceptacle à une rotor de pompe (4) située sur une extrémité (3.11) de l'arbre de rotor(3.1 ) et qui est relié à l'une des extrémités axiales de la gaine (1) ;
- comprenant une fixation axiale par montage à emboîtement entre le corps de pompe (2) d'une part et la gaine (1) d'autre part ;
- comprenant une fixation axiale par montage à emboîtement entre le corps de pompe (2) d'une part et le stator, en particulier le paquet de stator bobiné (5), d'autre part.

2. Pompe à liquide selon la revendication 1,
- comprenant une fixation indirecte par montage à emboîtement entre le corps de pompe (2) d'une part et le stator, en particulier le paquet de stator bobiné (5), d'autre part, par l'intermédiaire d'un couvercle (7) recevant le réceptacle au paquet de stator bobiné (5).

3. Pompe à liquide selon l'une des revendications 1 et/ou 2,
- comprenant un positionnement par ajustement appuyé, en particulier guidé, ne présentant pas de charge d'appui radiale importante, entre la gaine (1) d'une part et le stator, en particulier le paquet de stator bobiné (5), ou le couvercle (7) lui recevant le réceptacle, d'autre part.

4. Pompe à liquide selon au moins une des revendications 1-3,
- comprenant une gaine (1) en forme de pot ;
- comprenant une extrémité (3.11) de l'arbre de rotor (3) correspondant au côté A et saillante dans le corps de pompe (2) à travers le fond du pot de la gaine (1), afin de recevoir la rotor de pompe (4).

5. Pompe à liquide selon au moins une des revendications 1-4,
- comprenant un arbre de rotor (3.1) pouvant être emboîté dans le sens axial dans un logement de la rotor de pompe (4).

6. Pompe à liquide selon au moins une des revendications 1-5, en particulier selon la revendication 4 resp. 5,
- comprenant un logement de palier (10) pour l'extrémité de l'arbre de rotor (3.1) située sur le côté B, lequel logement de palier peut être fixé au niveau de l'extrémité de la gaine (1) située sur le côté B, dans une fixation axiale par montage à emboîtement.

7. Pompe à liquide selon au moins une des revendications 1-6,
- dont l'exécution est telle qu'il est possible à chaque fois d'emboîter dans le sens axial, par le côté B, la gaine (1) avec le corps de pompe (2) et/ou le stator, en particulier le paquet de stator bobiné (5) resp. le couvercle (7) recevant le réceptacle à celui-ci avec le corps de pompe (2) et/ou l'arbre de rotor (3.1) avec la rotor de pompe (4) qui, dans cette exécution, peut être appuyée depuis le côté A et/ou le logement de palier (10) situé sur le côté B avec la gaine (1).

8. Pompe à liquide selon au moins une des revendications 2-7,
- comprenant un couvercle (7) exécuté de manière spécifique à un client, en particulier pour ce qui est des spécifications de raccordement et de montage, les éléments de construction du moteur de l'unité faisant l'objet, autrement, d'une exécution largement universelle.

9. Pompe à liquide selon au moins une des revendications 1-8,
- comprenant un corps de pompe (2) pourvu d'une partie de bride (2.11) radiale sur le côté du moteur, laquelle partie de bride est pourvue d'un manchon de fixation (2.13) resp. d'éléments de réception à emboîtement (2.12), de préférence solidaires, faisant saillie dans le sens axial, prévus pour des éléments de réception à emboîtement antagonistes correspondants de la gaine (1) resp. du stator, en particulier du paquet de stator bobiné (5), resp. du couvercle (7) lui recevant le réceptacle.

10. Pompe à liquide selon au moins une des revendications 1-9,
- comprenant au moins un élément de palier intermédiaire (11;12 resp. 13) élastique, en particulier en élastomère, sous forme en particulier d'au moins un joint torique, dans la zone de la fixation réciproque par montage à emboîtement entre la gaine (1) et le corps de pompe (2) resp. entre le logement de palier (10) et la gaine (1).

11. Pompe à liquide selon la revendication 10,
- comprenant une fixation par conjugaison de forme des éléments de palier intermédiaires (11;12 resp. 13) élastiques par rapport à leurs éléments de construction faisant l'objet du montage à emboîtement, en vue d'un assemblage réciproque à enclenchement resp. par encliquetage.

12. Pompe à liquide selon l'une des revendications 10 et/ou 11,
- comprenant des éléments de palier intermédiaires (11;12 resp. 13) élastiques intégrés à chaque fois à un des éléments de construction devant être assemblés dans une fixation réciproque par montage à emboîtement, à la manière d'un élément de construction à plusieurs composants.

13. Pompe à liquide selon au moins une des revendications 1-12,
- comprenant un corps de pompe (2) divisé en deux dans le sens axial ;
- comprenant une partie supérieure (2.1) de corps de pompe, en particulier avec un raccord de tuyau de refoulement (2.15) intégré, située sur le côté du moteur,;
- comprenant une partie inférieure (2.2) de corps de pompe, en particulier avec un raccord de tuyau de d'aspiration (2.21) intégré, située sur le côté éloigné du moteur et pouvant être reliée à la partie supérieure (2.1) de corps de pompe.

14. Pompe à liquide selon la revendication 13,
- comprenant une partie inférieure (2.2) de corps de pompe variable de manière spécifique au client ;
- comprenant une partie supérieure (2.1) de corps de pompe unitaire et pouvant être utilisée de manière universelle.

15. Procédé d'assemblage de la pompe à liquide selon au moins une des revendications 1-14, avec, entre autres, les étapes suivantes :
- introduction axiale, par le côté B, d'un palier correspondant au côté A, en particulier d'un palier cylindrique (8), dans un logement de palier (2.14) de la gaine (1) situé sur le côté du fond du pot ;
- application des éléments de palier intermédiaires (11;12) élastiques, en particulier des joints toriques, sur l'extrémité de la gaine (1) située sur le côté A ;
- emboîtement axial du rotor (3), par le côté B, dans la gaine (1) avec introduction axiale de l'extrémité de la gaine (1) correspondant au côté A dans l'élément de réception à emboîtement (2.13) du corps de pompe (2) et introduction simultanée de l'extrémité (3.11) de l'arbre de rotor (3.1), correspondant au côté A, dans la rotor de pompe (4) qui peut s'appuyer, depuis le côté A, dans la partie supérieure (2.1) du corps de pompe qui n'est pas encore fermée par la partie inférieure (2.2) de corps de pompe ;
- application des éléments de palier intermédiaires (13) élastiques sur le logement de palier (10) situé sur le côté B ;
- introduction axiale dans la gaine (1), par le côté B, du logement de palier (10) correspondant au côté B préalablement muni d'un palier, en particulier d'un palier cylindrique (9) ;
- emboîtement axial, par le côté B, du couvercle (7) avec le paquet de stator bobiné (5) sur l'élément de réception à emboîtement (2.12) de la partie supérieure (2.1) du corps de pompe, avec appui sur la partie de bride (2.11);
- assemblage de la partie inférieure (2.2) du corps de pompe avec la partie supérieure (2.1) du corps de pompe, de préférence en intercalant un joint d'étanchéité (14) de corps de pompe.
